# EUROPEAN PATENT SPECIFICATION

(11) **EP 0 826 908 B1**
(45) Date of publication and mention of the grant of the patent: **05.06.2002**
(21) Application number: 97114800.2
(22) Date of filing: 27.08.1997
(51) Int. Cl.: F16H 59/02

(54) **Apparatus for manipulating a transmission for a vehicle**
Wähleinrichtung für ein Getriebe eines Fahrzeuges
Dispositif de commande pour une transmission d'un véhicule

(30) Priority: 29.08.1996 JP 24545796
(43) Date of publication of application: 04.03.1998
(73) Proprietor: Niles Parts Co., Ltd., Tokyo 143 (JP)
(72) Inventor: Hirano, Mineo, Ota-Ku, Tokyo 143 (JP); Torii, Yasuo, Ota-Ku, Tokyo 143 (JP)
(74) Representative: Luderschmidt, Schüler & Partner GbR

(56) References cited:
- EP-A- 0 784 169
- DE-A- 3 909 565
- FR-A- 2 397 054
- US-A- 3 292 450
- US-A- 4 401 866
- PATENT ABSTRACTS OF JAPAN vol. 096, no. 004, 30 April 1996 & JP 07 332477 A (MITSUBISHI MOTORS CORP), 22 December 1995,

## Description

The present invention relates to an apparatus for manipulating a transmission for a vehicle, wherein speeds of transmission for a vehicle can be switched-over both automatically and manually, and in particular to an apparatus for manipulating a transmission for a vehicle, which is so devised that a switching unit can be used in common, even if design of a shift lever, etc. is changed, in case where the switching unit for detecting whether the shift lever is positioned on a first path side, at which the automatic transmission mode is executed, or on a second path side, at which the manual transmission mode is executed, is attached to the shift lever.

Recently an apparatus for manipulating a transmission for a vehicle, wherein speeds of transmission for a vehicle can be switched-over both automatically and manually, has been developed. This apparatus for manipulating a transmission for a vehicle was constructed so as to be provided with a first path having an automatical transmission position, at which speeds of transmission were switched-over automatically, depending on a drive state, a second path extending parallelly to the first path and having a manual transmission position, at which speeds of transmission were switched-over manually, and a transversal path connecting the second path to the first path as paths, through which a shift lever supported pivotably with respect to a body of vehicle was movable, a switching unit for detecting on which side the shift lever was positioned, the first path side or the second path side, being attached to the shift lever. This kind of prior art techniques is described e.g. in JP-A-Hei 2-8545.

DE-39 09 565 A discloses a shift lever according to the preamble of claim 1, being pivotably supported about a first transversal and a second longitudinal axis, so that the shift lever is movable in two parallel and a transversal path. In order to detect on which side the shift lever is positioned, there is mounted a switch in the transversal path which could be actuated by the shift lever. The switch can be turned around an axis which is perpendicular to the first and second axis.

US-A-4,401,866 describes a lever control apparatus having a shift lever being pivotable around a first axis and a second axis. Further, there is provided a switch with a toggle, the toggle being pivotable around an axis parallel to the second longitudinal axis.

A gear shift apparatus for a vehicle is further disclosed in EP-A-0 784 169 A2 (prior art according to 54 (3) EPC). In order to detect on which side the shift lever of the apparatus is positioned, there is provided a switch with a moving member being connected to the shift lever. The moving member is movable but not pivotable along a transversal axis.

However, by the prior art techniques, it was necessary to design newly a switching unit, in case where design of the shift lever, etc. was changed. Therefore they had such problems that kinds of switching units increased, which not only necessitated a number of management steps but also gave rise to a risk of mounting erroneous parts, and also that fabrication cost of the switching unit was raised.

Object of the present invention is to devise an apparatus for manipulating a transmission for a vehicle which can be used in common, even if design of a shift lever, etc. is changed.

The object of the invention is achieved with the subject matter of claim 1.

In an apparatus for manipulating a transmission for a vehicle, by which speeds of transmission for a vehicle can be switched-over both automatically and manually, it is possible to use the switching unit for detecting whether the shift lever is positioned on the first path side, at which the automatic transmission mode is executed, or on the second path side, at which the manual transmission mode is executed, in common, even if design of the shift lever, etc. is changed. In addition, it is possible not only to decrease the number of design steps of the switching unit and the number of various kinds of management steps at mass production but also to obtain effects that there is no risk of mounting erroneous parts and that fabrication cost of the switching unit is lowered.

Further, in case where the manipulating member is constructed in a form of a sliding bearing, in addition to the above described effects, another effect can be obtained that it is possible to form easily the construction for making the manipulating member freely pivotable.

Still further, in case where either one of the connecting portion and the manipulating member is made of synthetic resin, in addition to the above described effects, another effect can be obtained that strange noise is hardly produced at contact places between them so that no unpleasant feeling is given to persons in the vehicle.

Moreover, in case where the shift lever includes a first supporting shaft permitting it to pivot in a direction, in which the first path and the second path extend, and a second supporting shaft permitting it to pivot in another direction, in which the transversal path extends, the connecting portion being formed in one body with a block having the second supporting shaft, in addition to the above described effects, still other effects can be obtained that a relative positional relation between the connecting portion and the manipulating member is made always constant, independently from the manipulation of the shift lever and that the size of the connecting portion can be set at the necessary minimum.

A preferred embodiment of the present invention is described in greater detail below with reference to the drawings, in which:
- Fig. 1: is a perspective view of a principal part of a mode for carrying out the present invention;
- Fig. 2: is a perspective view of the mode for carrying out the present invention indicated in Fig. 1 in the whole;
- Fig. 3: is a top view of the switching unit indicated in Fig. 1, in which a part thereof is cut-off;
- Fig. 4: is a front view of the switching unit indicated in Fig. 3, in which a part thereof is cut-off;
- Fig. 5: is a cross-sectional view of the switching unit indicated in Fig. 4 along a line indicated by X-X;
- Fig. 6: is a front view showing an example of the mounting position of the switching unit indicated in Fig. 3; and
- Fig. 7: is a front view showing another example of the mounting position of the switching unit indicated in Fig. 3.

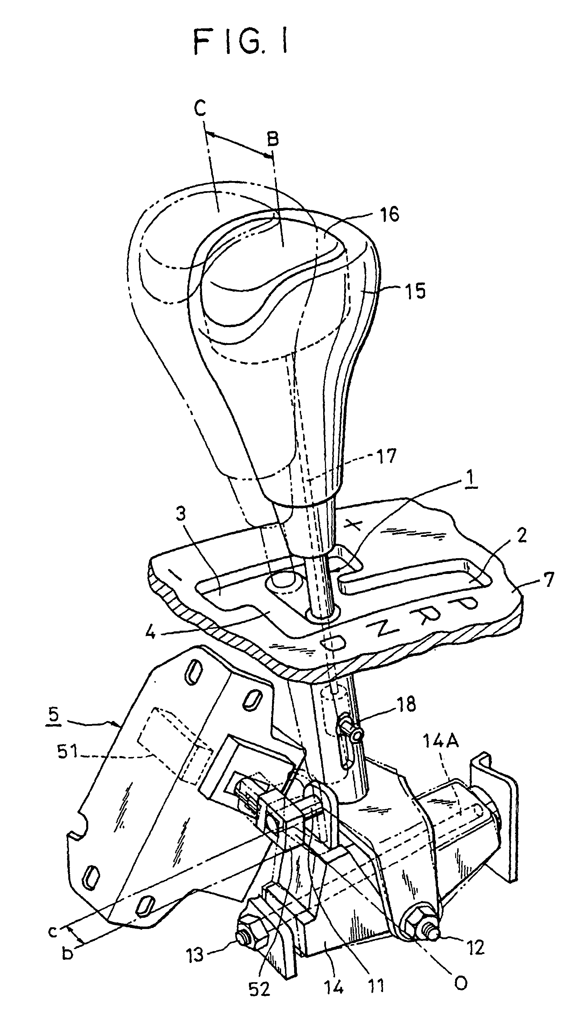

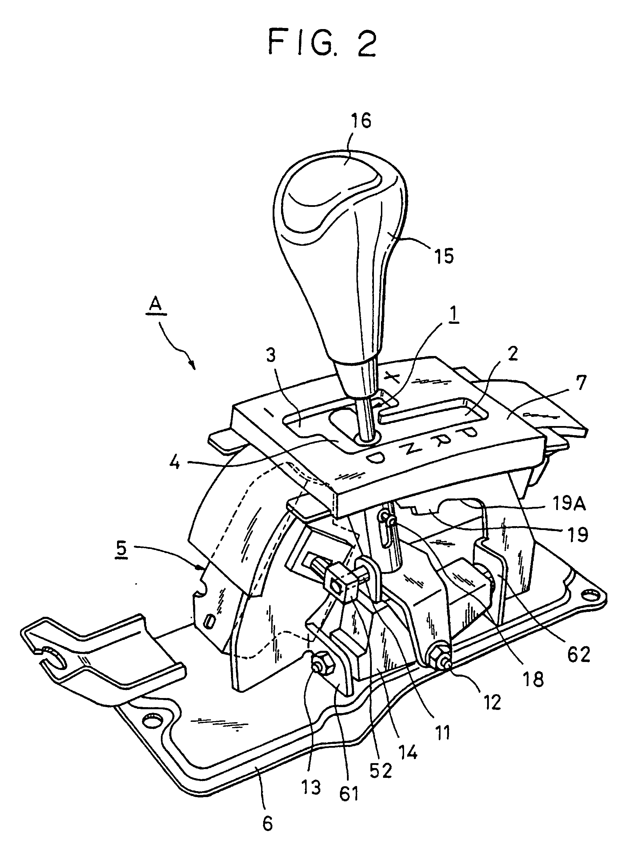

By an apparatus A for manipulating a transmission indicated by the mode for carrying out the invention speeds of transmission for a vehicle can be switched-over both automatically and manually. As indicated in Figs. 1 and 2, as paths, through which a shift lever 1 supported pivotably with respect to a body of vehicle can be moved, it includes a first path 2 having an automatical transmission position, at which speeds of transmission are switched-over automatically, depending on a drive state, a second path 3 extending parallelly to the first path 2 and having a manual transmission position, at which speeds of transmission are switched-over manually, and a transversal path 4 connecting the second path to the first path 2. A switching unit 5 is attached to the shift lever 1 in order to detect that the shift lever 1 is positioned at the second path 3. Hereinbelow they will be explained more in detail.

The shift lever indicated by reference numeral 1 in the figures includes a first supporting shaft 12 and a second supporting shaft 13 in a base portion thereof. The first supporting shaft 12 and the second supporting shaft 13 are constructed so as to support pivotably the shift lever 1. At first, the supporting shaft 12 is a supporting shaft permitting the shift lever 1 to pivot in a direction, in which the first and second paths 2 and 3 extend, mounted on a block 14 made of synthetic resin in one body with a connecting portion 11 made of metal. On the other hand, the second supporting shaft 13 is a supporting shaft permitting the shift lever 1 to pivot in another direction, in which the transversal path 4 extends, made pass through a hole 14 formed in the block 14. That is, the shift lever 1 is in a state, where it is supported by a joint consisting of the first supporting shaft 12 and the second supporting shaft 13 so that the shift lever 1 can be freely pivoted in the first path 2, the second path 3 and the transversal path 4. The second supporting shaft 13 is supported by two standing portions 61 and 62 formed by press in one body with a detent plate 19 and further the standing portions 61 and 62 as well as the detent plate 19 are welded to a base 6.

The shift lever 1 has a knob 15, in an upper part of which there is disposed a shift button 16. The shift button 16 is a member, which is operated when the shift lever 1 is positioned on the first path 2. A detent pin 18 connected with the shift button 16 through a rod 17 is so constructed that it is out of a cam 19A formed in the detent plate 19, when the shift button 16 is operated by pushing it. Consequently it is a matter of course that, in case where the shift lever 1 is shifted from the P range to another range, in case where it is shifted to the R range, etc., it is never shifted erroneously, unless the shift button 16 is operated by pushing.

Next the switching unit indicated by reference numeral 5 in the figures will be explained. The switching unit 5 includes a first switching mechanism 51, which detects whether the shift lever 1 is positioned on the first path 2 side (B side in Fig. 1) or it is positioned on the second path 3 side (C side in Fig. 1) to output a switching signal. The first switching mechanism 51 is engaged with a first manipulating member 52 and includes an automatic transmission side contact (not indicated in the figures), which is turned-on, when the shift lever 1 is positioned on the first path 2 side (B side in Fig. 1) and the first manipulating member 52 is drawn out to a b position in Fig. 1, and a manual transmission side contact (not indicated in the figures), which is turned-on, when the shift lever 1 is positioned on the second path 3 side (C side in Fig. 1) and the first manipulating member 52 is pushed-in to a c position in Fig. 1. These contacts are connected with a transmission controller (hereinbelow called simply "T/M controller"), although this is not indicated in the figures.

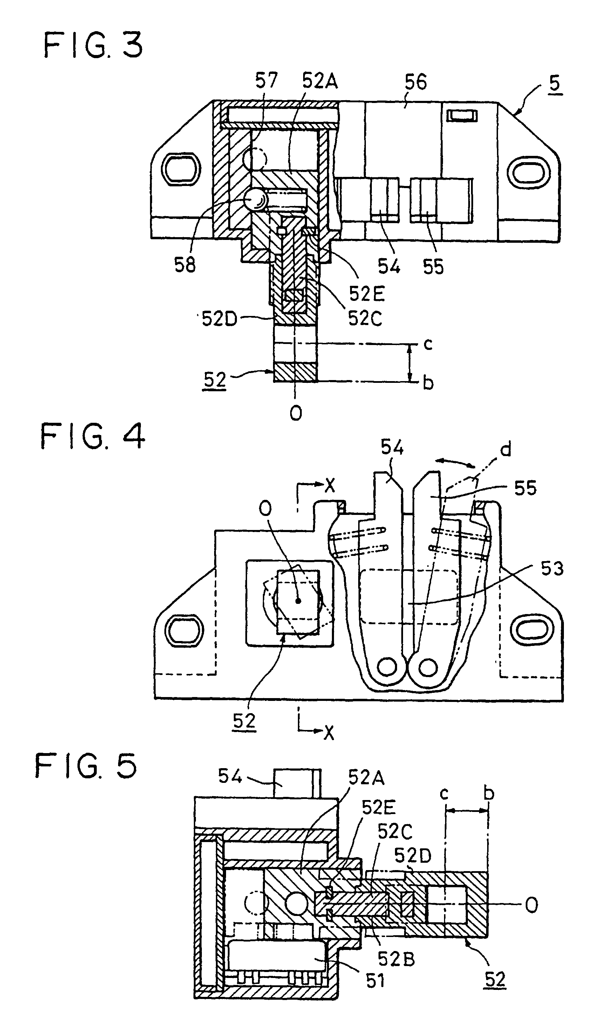

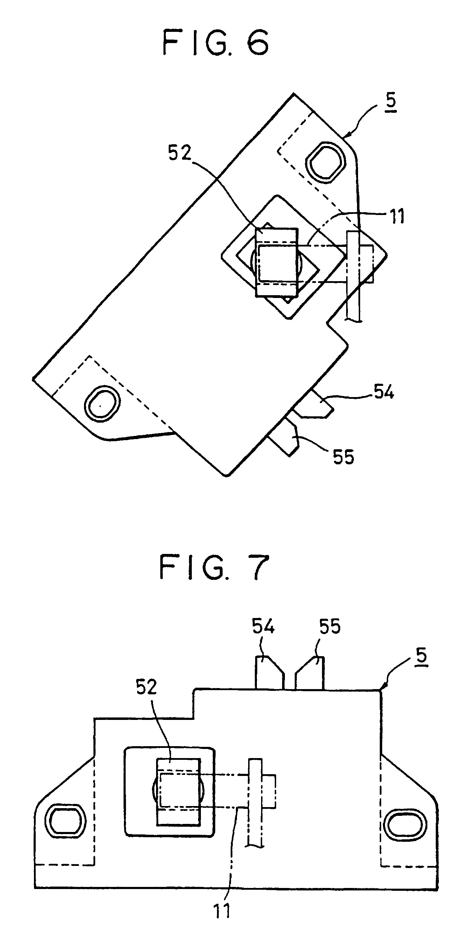

Now the first manipulating member 52 will be explained more in detail. Connected with the connecting portion 11 of the shift lever 1, the first manipulating member 52 transmits the state of the shift lever 1 to the switching mechanism 51. The switching unit 5 has nodes 57 within a case 56. The nodes 57 cooperate with a steel ball 58 disposed on the first manipulating member 52 so as to hold the first manipulating member 52 at the b position or the c position indicated in Figs. 3 and 5.

The first manipulating member 52 is engaged with the first switching mechanism 51 and consists of a sliding body 52A sliding along the nodes 57 in the case 56, a column portion 52C made of metal inserted into a round hole 52B formed in the sliding body 52A, a pivoting body 52D made of synthetic resin formed by inserting the column portion 52C, and a holding piece 52E made of metal holding the column portion 52C in the sliding body 52A. The diameter of the column portion 52C is set so as to be somewhat smaller than that of the round hole 52B so that these two members constitute a sliding bearing.

In this way, the column portion 52C and the pivoting body 52D can pivot freely around the axis O indicated in Figs. 1 and 3 to 5 in one body. Therefore, even if design of different parts of the shift lever 1 and the apparatus A for manipulating a transmission is changed and mounting pose of the switching unit 5 is varied as indicated in Figs. 6 and 7, it is possible to connect easily the manipulating member 52 with the connecting portion 11 of the shift lever 1 by pivoting it as described in the above. That is, the switching unit 5 itself can be used in common, even if design of the shift driver 1, etc. is changed.

The switching unit 5 includes further a second switching mechanism 53, which detects that on the second path 3 side (C side in Fig. 1) the shift lever 1 is manipulated to the shift up side (side indicated by a + sign on an indicator surface 7 in Fig. 1) or the shift down side (similarly side indicated by a - sign) to output a switching signal. The second switching mechanism 53 is engaged with second manipulating member 54 and 55 and includes a shift up side contact (not indicated in the figures), which is turned-on, when the shift lever 1 is manipulated to the shift up side, and a shift down side contact (not indicated in the figures), which is turned-on, when the shift lever 1 is manipulated to the shift down side. These contacts are connected with the T/M controller. The second manipulating members 54 and 55 are constructed so as to be able to pivot e.g. as indicated by an imaginary line d in Fig. 4 and to turn-on the second switching mechanism 53 by pivoting.

Now operation thereof will be explained. At first, a case where the shift lever 1 is on the first path 2 (B position side indicated in Fig. 1) will be explained. At this time the manipulating member 52 of the switching unit 5 is drawn out to the b position by the connecting portion 11 of the shift lever 1. When the T/M controller judges that the shift lever 1 is positioned on the first path 2 by means of the switching signal inputted by the first switching mechanism 51 of the switching unit 5, it executes the automatic transmission mode. That is, the T/M controller sets automatically a selected speed of the transmission, depending on a manipulation position among P (parking), R (reverse), N (neutral) and D (drive) set in the first path 2 and the drive state of the vehicle.

Next a case where the shift lever 1 is on the second path 3 (C position side indicated in Fig. 1) will be explained. At this time, the first manipulating member 52 of the switching unit 5 is pushed-in to the c position by the connecting portion 11 of the shift lever 1. When the T/M controller judges that the shift lever 1 is positioned on the second path 3 by means of the switching signal inputted by the first switching mechanism 51 of the switching unit 5, it executes the manual transmission mode. That is, at the manual transmission mode the T/M controller receives a switching signal from the second switching mechanism 53 and determines the manipulation direction of the shift lever 1 by means of the switching signal. In case where it is judged that the shift lever 1 is manipulated to the shift up (+) side, speeds of the transmission are shifted-up one by one for every manipulation. On the contrary, in case where it is judged that the shift lever 1 is manipulated to the shift down (-) side, speeds of the transmission are shifted-down one by one for every manipulation. In case where the shift lever 1 is not manipulated, i.e. in case where the shift lever 1 is on the neutral position, a speed of the transmission at that time is maintained.

## Claims

1. An apparatus for manipulating a transmission for a vehicle comprising a first path (2) having an automatical transmission position, at which speeds of transmission are switched-over automatically, depending on a drive state, a second path (3), extending parallel to said first path (2) and having a manual transmission position, at which speeds of transmission are switched-over manually, as paths through which a shift lever (1) supported pivotably about a first axis (12) can be moved, and a transversal path (4) connecting said second path (3) to said first path (2) as a path through which said shift lever (1) supported pivotably about a second axis (13) can be moved, further comprising a switching unit (5) for detecting on which side said shift lever (1) is positioned, the first path (2) side or the second path (3) side, said switching unit (5) comprising a manipulating member (52) engaged with a switching mechanism (51) within said switching unit (5), **characterized in that** said manipulation member (52) is connected to a connecting portion (11) of said shift lever (1), said manipulating member (52) being pivotable around an axis (0) parallel to said first axis.

2. An apparatus for manipulating a transmission for a vehicle according to claim 1, **characterized in that** said manipulating member (52) is constructed in a form of a sliding bearing.

3. An apparatus for manipulating a transmission for a vehicle according to claim 1 or 2, **characterized in that** either one of said connecting portion (11) and said manipulating member (52) is made of synthetic resin.

4. An apparatus for manipulating a transmission for a vehicle according to one of claims 1 to 3, **characterized in that** said shift lever (1) includes a first supporting shaft (12) permitting it to pivot in a direction, in which said first path (2) and said second path (3) extend, and a second supporting shaft (13) permitting it to pivot in another direction, in which said transversal path (4) extends, said connecting portion (11) being connected to a block (14) having said second supporting shaft (13).

## Patentansprüche

1. Wähleinrichtung für ein Fahrzeuggetriebe, umfassend eine erste Bahn (2) mit einer automatischen Getriebestellung, bei der Geschwindigkeiten des Getriebes je nach Antriebszustand automatisch umgeschaltet werden, eine zweite Bahn (3), welche sich parallel zur ersten Bahn (2) erstreckt und eine manuelle Getriebestellung aufweist, bei der Geschwindigkeiten des Getriebes manuell umgeschaltet werden, als Bahnen, durch die ein um eine erste Achse (12) schwenkbar getragener Schalthebel (1) bewegt werden kann, sowie eine Querbahn (4), welche die zweite Bahn (3) mit der ersten Bahn (2) als Bahn verbindet, durch die der um eine zweite Achse (13) schwenkbar getragene Schalthebel (1) bewegt werden kann, ferner umfassend ein Schaltgerät (5) zum Feststellen, auf welcher Seite der Schalthebel (1) liegt, nämlich auf Seiten der ersten Bahn (2) oder zweiten Bahn (3), wobei das Schaltgerät (5) ein Bedienungselement (52), das mit einem Schaltmechanismus (51) innerhalb des Schaltgeräts (5) im Eingriff steht, umfasst, **dadurch gekennzeichnet, dass** das Bedienungselement 52 mit einem Verbindungsteil (11) des Schalthebels (1) verbunden ist, wobei das Bedienungselement (52) um eine Achse (0) parallel zur ersten Achse schwenkbar ist.

2. Wähleinrichtung für ein Fahrzeuggetriebe gemäß Anspruch 1, **dadurch gekennzeichnet, dass** das Bedienungselement (52) in Form eines Gleitlagers konstruiert ist.

3. Wähleinrichtung für ein Fahrzeuggetriebe gemäß Anspruch 1 oder 2, **dadurch gekennzeichnet, dass** das Verbindungsteil (11) oder Bedienungselement (52) aus einem synthetischen Harz hergestellt sind.

4. Wähleinrichtung für ein Fahrzeuggetriebe gemäß einem der Ansprüche 1 bis 3, **dadurch gekennzeichnet, dass** der Schalthebel (1) eine erste Stützwelle (2), welche sein Schwenken in eine Richtung erlaubt, in der die erste Bahn (2) und die zweite Bahn (3) sich erstrecken, und eine zweite Stützwelle (13) umfasst, welche es erlaubt, diesen in eine andere Richtung zu schwenken, in der sich die Querbahn (4) erstreckt, wobei das Verbindungsteil (11) mit einem Block (14) verbunden ist, welcher die zweite Stützwelle (13) aufnimmt.

## Revendications

1. Dispositif de manoeuvre d'une transmission d'un véhicule comprenant une première piste (2) comportant une position de transmission automatique, au niveau de laquelle les vitesses de transmission sont commutées automatiquement, suivant un état de conduite, une seconde piste (3) s'étendant parallèlement à la première piste (2) et comportant une position de transmission manuelle au niveau de laquelle les vitesses de transmission sont commutées manuellement, en tant que pistes à travers lesquelles un levier de changement de vitesse (1) supporté avec possibilité de pivotement autour d'un premier axe (12) peut être déplacé, et une piste transversale (4) reliant ladite seconde piste (3) à ladite première piste (2) en tant que piste à travers laquelle ledit levier de changement de vitesse (1) supporté avec possibilité de pivotement autour d'un second axe (13) peut être déplacé, comprenant en outre une unité de commutation (5) destinée à détecter sur quel côté ledit levier de changement de vitesse (1) est positionné, le côté de la première piste (2) ou le côté de la seconde piste (3), ladite unité de commutation (5) comprenant un élément de manoeuvre (52) mis en prise avec un mécanisme de commutation (51) à l'intérieur de ladite unité de commutation (5), **caractérisé en ce que** ledit élément de manoeuvre (52) est relié à une partie de connexion (11) dudit levier de changement de vitesse (1), ledit élément de manoeuvre (52) pouvant pivoter autour d'un axe (0) parallèle audit premier axe.

2. Dispositif de manoeuvre d'une transmission d'un véhicule selon la revendication 1, **caractérisé en ce que** ledit élément de manoeuvre (52) est constitué sous la forme d'un palier de glissement.

3. Dispositif de manoeuvre d'une transmission d'un véhicule selon la revendication 1 ou 2, **caractérisé en ce que** chacun de ladite partie de connexion (11) et dudit élément de manoeuvre (52) est en résine synthétique.

4. Dispositif de manoeuvre d'une transmission d'un véhicule selon l'une des revendications 1 à 3, **caractérisé en ce que** le levier de changement de vitesse (1) comprend un premier axe de support (12) lui permettant de pivoter dans une direction, dans laquelle ladite première piste (2) et ladite seconde piste (3) s'étendent, et un second axe de support (13) lui permettant de pivoter dans une autre direction, dans laquelle la piste transversale (4) s'étend, ladite partie de connexion (11) étant reliée à un bloc (14) comportant ledit second axe de support (13).
